(19) Europäisches Patentamt
European Patent Office
Office européen des brevets

(11) **EP 3 516 736 B1**

(12) **FASCICULE DE BREVET EUROPEEN**

(45) Date de publication et mention de la délivrance du brevet:
**27.10.2021 Bulletin 2021/43**

(21) Numéro de dépôt: **17780505.8**

(22) Date de dépôt: **25.09.2017**

(51) Int Cl.:
***H01Q 7/08*** (2006.01)

(86) Numéro de dépôt international:
**PCT/FR2017/052574**

(87) Numéro de publication internationale:
**WO 2018/055313 (29.03.2018 Gazette 2018/13)**

(54) **ANTENNE À TIGES FERROMAGNÉTIQUES BOBINÉES ET COUPLÉES ENTRE ELLES**

ANTENNE MIT GEWUNDENEN UND MITEINANDER VERKOPPELTEN FERROMAGNETISCHEN STANGEN

ANTENNA WITH FERROMAGNETIC RODS WOUND AND COUPLED TOGETHER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2016 FR 1659031**

(43) Date de publication de la demande:
**31.07.2019 Bulletin 2019/31**

(73) Titulaires:
• **TDF**
**92120 Montrouge (FR)**
• **Université de Rennes I**
**35065 Rennes Cedex (FR)**

(72) Inventeurs:
• **KAVERINE, Evgueni**
**91120 Palaiseau (FR)**
• **PALUD, Sébastien**
**35000 Rennes (FR)**
• **HIMDI, Mohamed**
**35200 Rennes (FR)**
• **COLOMBEL, Franck**
**35160 Monfort-sur-Meu (FR)**

(74) Mandataire: **Gevers & Orès**
**9 rue St Antoine du T**
**31000 Toulouse (FR)**

(56) Documents cités:
**FR-A- 1 388 350          JP-A- 2000 183 632**
**US-A1- 2002 024 429**

• **ALANSON P SAMPLE ET AL: "Analysis, Experimental Results, and Range Adaptation of Magnetically Coupled Resonators for Wireless Power Transfer", IEEE TRANSACTIONS ON INDUSTRIAL ELECTRONICS, IEEE SERVICE CENTER, PISCATAWAY, NJ, USA, vol. 58, no. 2, 22 March 2010 (2010-03-22) , pages 544-554, XP011354363, ISSN: 0278-0046, DOI: 10.1109/TIE.2010.2046002**
• **HU HAO ET AL: "Multiband and Broadband Wireless Power Transfer Systems Using the Conformal Strongly Coupled Magnetic Resonance Method", IEEE TRANSACTIONS ON INDUSTRIAL ELECTRONICS, IEEE SERVICE CENTER, PISCATAWAY, NJ, USA, vol. 64, no. 5, 17 May 2016 (2016-05-17), pages 3595-3607, XP011645455, ISSN: 0278-0046, DOI: 10.1109/TIE.2016.2569459 [retrieved on 2017-04-10]**

**Description**

**1. Domaine technique de l'invention**

L'invention concerne une antenne pour l'émission et/ou la réception d'ondes de fréquence kilométrique (30-300kHz), hectométrique (0,3-3 MHz) ou décamétrique (3-30 MHz). En particulier, l'invention concerne une antenne ferrite à tiges ferromagnétiques couplées, c'est-à-dire comprenant au moins deux bobinages enroulés autour d'au moins deux tiges ferromagnétiques.

**2. Arrière-plan technologique**

Les antennes ferrites présentent généralement une impédance non adaptée comprenant une forte composante réactive qui ne permet pas leur utilisation d'une manière efficace dans des systèmes à impédance réelle normalisée (par exemple 50 $\Omega$).

Pour réduire cette composante réactive, on utilise une capacité d'accord, permettant la disparition de la partie réactive de l'impédance mais l'impédance reste généralement très grande (dizaines-centaines de k$\Omega$), d'autant plus que le nombre de tours constituant le bobinage est important.

Ainsi, pour obtenir une impédance plus faible, le nombre de tours du bobinage est réduit, mais cette réduction entraine une diminution du gain de l'antenne. Le brevet JP2000183632 divulgue une antenne ferrite pour l'émission et/ou la réception d'ondes de fréquence kilométrique 134KHz.

D'autres solutions ont été proposées pour obtenir une antenne ferrite ayant un gain satisfaisant et une impédance réduite, par exemple de 50 $\Omega$, l'impédance d'entrée de la quasi-totalité des dispositifs destinés au domaine des radiofréquences.

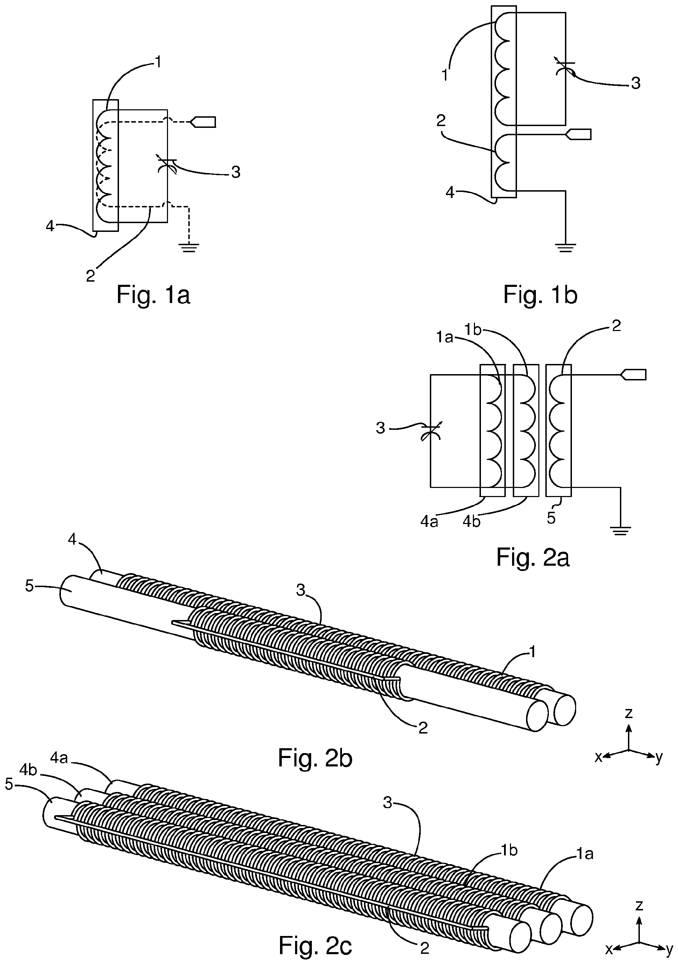

Ces solutions, représentées sur les figures 1a et 1b, consistent à ajouter au bobinage 1 principal un deuxième bobinage, dit bobinage 2 secondaire sur la même tige 4 ferromagnétique (aussi appelée noyau ferromagnétique ou noyau en ferrite). Le bobinage 1 principal est relié à un système 3 d'accord, le bobinage 1 principal et le système 3 d'accord formant ainsi un contour résonant dit contour principal.

Dans une première solution représentée sur la figure 1a, le bobinage 2 secondaire est enroulé au-dessus du bobinage 1 principal.

Dans une seconde solution représentée sur la figure 1b, les deux bobinages sont enroulés côte à côte.

Ces solutions permettent une meilleure adaptation d'impédance, mais présentent d'autres inconvénients : l'antenne selon la première solution perd rapidement sa deuxième résonance, même avec un nombre de tours modéré au niveau du bobinage 1 principal. Une antenne selon la deuxième solution nécessite un partage de l'espace sur la tige 4 ferromagnétique, ce qui réduit l'efficacité potentielle maximale de l'antenne car le contour 3 principal ne peut occuper la totalité de la longueur de la tige 4 ferromagnétique. De plus, l'impédance à la résonance de cette antenne est tributaire à la fois du nombre de tours du bobinage 2 secondaire, mais également de la position respective des deux bobinages sur la tige ferromagnétique, ce qui peut rendre l'utilisation de cette solution difficile d'un point de vue méthodologique. En outre, cette solution ne permet un changement de fréquence d'accord qu'en modifiant la valeur des composants formant le système d'accord.

Enfin, les deux solutions ont une efficacité fortement réduite à des fréquences supérieures à la fréquence de résonance ce qui implique leur utilisation uniquement à la fréquence d'accord. En particulier, l'impédance des antennes selon les solutions de l'art antérieur à la résonance secondaire est soit quasi nulle (première solution), soit très faible (environ 5 $\Omega$ pour la deuxième solution).

Les inventeurs ont ainsi cherché une solution alternative aux solutions proposées d'adaptation d'antenne ferrite à une impédance réelle faible, notamment à 50 $\Omega$.

**3. Objectifs de l'invention**

L'invention vise à pallier au moins certains des inconvénients des antennes ferrites connues.

En particulier, l'invention vise à fournir, dans au moins un mode de réalisation de l'invention, une antenne ferrite accordable simplement et efficacement à une impédance réelle, notamment 50 $\Omega$.

L'invention vise aussi à fournir, dans au moins un mode de réalisation, une antenne ferrite dont l'efficacité est maximisée.

L'invention vise aussi à fournir, dans au moins un mode de réalisation, une antenne ferrite ayant une bonne agilité fréquentielle, permettant d'élargir la bande d'accord totale de l'antenne.

L'invention vise aussi à fournir, dans au moins un mode de réalisation, une antenne ferrite dont la bande passante est élargie.

L'invention vise aussi à fournir, dans au moins un mode de réalisation, une antenne ferrite possédant une multi-résonance.

L'invention vise aussi à fournir, dans au moins un mode de réalisation, une antenne ferrite avec une résonance secondaire à haute impédance.

L'invention vise aussi à fournir, dans au moins un mode de réalisation, une antenne ferrite avec un gain supérieur aux solutions de l'art antérieur au-delà de la résonance principale.

**4. Exposé de l'invention**

Pour ce faire, l'invention concerne une antenne ferrite pour l'émission et/ou la réception d'ondes de fréquence kilométrique, hectométrique ou décamétrique, comprenant :

- au moins un premier contour résonant, dit contour principal, comprenant au moins un premier bobinage dit bobinage principal, au moins une première tige ferromagnétique dite tige ferromagnétique principale et un système d'accord, chaque bobinage principal étant enroulé autour d'une tige ferromagnétique principale et connecté au système d'accord comprenant un condensateur relié en parallèle avec le bobinage principal, de manière a créer une première fréquence de résonance, dite fréquence d'accord, caractérisée en ce qu'elle comprend en outre :
- un deuxième contour non-résonant, dit contour secondaire, comprenant un bobinage secondaire séparé électriquement de chaque bobinage principal et une tige ferromagnétique secondaire autour de laquelle est enroulé le bobinage secondaire, ladite antenne étant caractérisée en ce que:

  - ledit contour secondaire est non résonant à savoir qu'il ne comprend pas de condensateur de sorte que le circuit secondaire ne forme pas un circuit de type LC; et

  - chaque tige ferromagnétique principale et la tige ferromagnétique secondaire sont disposées parallèlement les unes aux autres de façon à permettre un couplage magnétique de chaque bobinage principal avec le bobinage secondaire, de manière à créer une deuxième fréquence de résonance distincte de la fréquence d'accord.

Une antenne ferrite selon l'invention permet donc une adaptation de l'antenne ferrite à une impédance réelle, notamment 50 Ω, grâce à l'utilisation d'un bobinage secondaire disposé sur une autre tige ferromagnétique que celle du bobinage principal. Les tiges ferromagnétiques ne sont pas reliées l'une à l'autre. Le contour secondaire est non-résonant car contrairement au contour principal, il ne comprend pas de condensateur et ainsi ne forme pas de circuit LC.

Cette disposition permet en outre de maximiser l'efficacité de l'antenne car le bobinage principal peut occuper l'intégralité de la première tige ferromagnétique. En utilisant plusieurs bobinages principaux reliés en parallèle (et physiquement parallèles), l'efficacité de rayonnement de l'antenne est améliorée.

En outre, une antenne selon l'invention possède une résonance secondaire à haute impédance, de l'ordre de quelques kΩ.

De plus, le gain de l'antenne est amélioré au-delà de la résonance principale car les flux magnétiques dans les bobinages principaux et le bobinage secondaire sont sensiblement en phase, contrairement à l'art antérieur où ils sont déphasés de 180°.

L'antenne peut être utilisée dans un système d'émission à faible puissance, tels que les systèmes de radio-identification RFID (pour *Radio Frequency Identification* en anglais), les systèmes d'émission/réception (simplex, duplex ou full duplex) bande étroite moyenne et longue portée ainsi que les systèmes de réception et d'interception de l'information sous forme de signaux modulés ou non qui se propagent par voie hertzienne. L'antenne peut en outre être utilisée dans des détecteurs de métaux.

En particulier, l'invention possède deux résonances, pouvant être mises à profit pour opérer en émission/réception simultanée. Dans ce cas, on utilisera de préférence la résonance la plus proche de 50 ohms à l'émission et l'autre résonance d'impédance plus élevée pour la réception.

Avantageusement et selon l'invention, la tige ferromagnétique principale et la tige ferromagnétique secondaire sont configurés pour pouvoir être déplacés en translation l'un par rapport à l'autre selon leurs directions principales.

Selon cet aspect de l'invention, le déplacement des tiges ferromagnétiques les unes par rapport aux autres permet l'ajustement de la fréquence de résonance de l'antenne ferrite.

Avantageusement et selon l'invention, le condensateur est un condensateur variable.

Selon cet aspect de l'invention, la modification de la valeur de la capacité du condensateur variable permet de régler l'accord de l'antenne.

Avantageusement, une antenne selon l'invention comprend au moins un deuxième contour principal, dit contour supplémentaire, et disposé parallèlement au contour principal et au contour secondaire.

Selon cet aspect de l'invention, l'antenne présente une bande passante élargie si le ou les contours principaux supplémentaires ont un bobinage principal présentant un nombre de tours identique autour de la tige ferromagnétique principale, ou présente de multiples résonances si le ou les contours supplémentaires ont un bobinage principal présentant un nombre de tours différents autour de la tige ferromagnétique principale. La position des contours principaux les uns par rapport aux autres influe en outre sur la largeur de bande passante ou la multi-résonance.

Chaque contour supplémentaire est connecté à un condensateur, pouvant être pour chaque contour supplémentaire, de valeur fixe ou variable. Les condensateurs de chaque contour supplémentaire peuvent avoir un facteur de qualité identique ou différent selon les contours supplémentaires. Ces différences peuvent contribuer au réglage de l'aspect multi-résonant ou large bande de l'antenne.

Avantageusement et selon ce dernier aspect de l'invention, au moins un des contours supplémentaires est configuré pour pouvoir être déplacés en translation par rapport au contour principal, dans une direction transversale à la direction principale de la tige ferromagnétique principale du contour principal.

Selon cet aspect de l'invention, le rapprochement ou l'éloignement des contours principaux supplémentaires permet une adaptation fréquentielle de l'antenne, permettant par exemple d'obtenir une antenne multi-résonante ou large bande dont on peut régler les fréquences résonantes ou la largeur de bande.

L'utilisation d'un condensateur variable et/ou de déplacements mécaniques d'un contour par rapport aux autres permet régler la fréquence d'accord principale de l'antenne sans perdre l'adaptation ni l'efficacité. Ce n'est pas le cas avec les solutions de l'art antérieur, qui sont notamment limitées en termes de réglages mécaniques par une baisse rapide d'adaptation ou d'efficacité.

L'invention concerne également un système d'antenne, caractérisé en ce qu'il comprend deux antennes ferrites selon l'invention, une première antenne ferrite et une deuxième antenne ferrite dont les tiges ferromagnétiques principales et secondaire s'étendent selon une direction perpendiculaire à la direction des tiges ferromagnétiques principales et secondaire de la première antenne ferrite, et la deuxième antenne ferrite présentant un déphasage électrique de $\pm\pi/4$ par rapport à la première antenne ferrite.

Selon cet aspect de l'invention, le système d'antenne permet d'obtenir un rayonnement omnidirectionnel avec des antennes ferrites possédant naturellement des nuls de rayonnement aux extrémités des tiges ferromagnétiques. En outre, le système d'antenne obtenu peut être utilisé pour une fonction radiogoniométrique en connectant chaque antenne sur un système d'acquisition qui détermine la direction du signal à localiser en fonction des amplitudes et des phases du signal en sortie des antennes.

L'invention concerne également un système d'émission/réception d'ondes de fréquence kilométrique, hectométrique ou décamétrique, caractérisé en ce qu'il comprend une antenne ferrite selon l'invention.

Un système d'émission/réception selon l'invention peut être utilisé par exemple comme un système d'émission à faible puissance, tels que les systèmes de radio-identification RFID (pour *Radio Frequency Identification* en anglais), les systèmes d'émission/réception (simplex, duplex ou full duplex) bande étroite moyenne et longue portée ainsi que les systèmes de réception et d'interception de l'information sous forme de signaux modulés ou non qui se propagent par voie hertzienne.

L'invention concerne également un système d'émission/réception d'ondes de fréquence kilométrique, hectométrique ou décamétrique, caractérisé en ce qu'il comprend un système d'antenne selon l'invention.

Un système d'émission/réception selon l'invention peut être utilisé par exemple comme un système d'acquisition radiogoniométrique qui permet de déterminer la direction d'un signal à localiser en fonction des amplitudes et des phases du signal reçu en sortie des antennes formant le système d'antenne.

En particulier, l'invention concerne également système d'émission/réception de type terminal de communication électronique pour la réception et/ou l'émission d'ondes de fréquence kilométrique, hectométrique ou décamétrique, caractérisé en ce qu'il comprend une antenne selon l'invention, et un dispositif d'émission/réception relié à l'antenne et adapté pour traiter les signaux reçus par l'antenne et/ou transmettre à l'antenne des signaux à émettre.

Avantageusement, un terminal de communication électronique selon l'invention comprend des moyens de réglage électronique et/ou mécanique de la fréquence principale d'accord de l'antenne.

Notamment, lorsque l'antenne comprend un condensateur variable, les moyens de réglages peuvent permettre de modifier la capacité dudit condensateur variable. Lorsque l'antenne comprend des contours ou tiges ferromagnétiques pouvant être déplacés en translation les uns par rapport aux autres (mode de réalisation décrits précédemment), les moyens de réglages permettent le déplacement mécanique desdits contours ou tiges ferromagnétiques.

L'invention concerne également une antenne, un système d'antennes, un système d'émission/réception et un terminal de communication électronique caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- les figures 1a et 1b, déjà décrites, sont des vues schématiques d'antennes ferrites selon l'art antérieur,
- la figure 2a est une vue schématique d'une antenne ferrite selon un premier mode de réalisation de l'invention,

- la figure 2b est une vue schématique en perspective d'une antenne ferrite selon un deuxième mode de réalisation de l'invention,
- la figure 2c est une vue schématique en perspective d'une antenne ferrite selon un troisième mode de réalisation de l'invention,
- la figure 3 est un graphique représentant l'évolution de l'impédance de sortie d'une antenne ferrite selon un mode de réalisation de l'invention sur un abaque de Smith,
- la figure 4 est une vue schématique des flux magnétiques circulant entre deux bobinages de type bobinages de transformateur,
- la figure 5 est un graphique représentant le niveau d'adaptation d'une antenne ferrite selon un mode de réalisation de l'invention en fonction de la position de la tige ferromagnétique principale par rapport à la tige ferromagnétique secondaire,
- la figure 6 est un graphique de comparaison du gain d'une antenne ferrite selon un mode de réalisation de l'invention et d'antennes selon l'art antérieur, en fonction de la fréquence,

- la figure 7 est une vue schématique en perspective d'une antenne ferrite selon un quatrième mode de réalisation de l'invention,
- la figure 8 est un graphique représentant l'évolution de l'impédance de sortie d'une antenne ferrite selon différents modes de réalisation de l'invention sur un abaque de Smith selon la perméabilité magnétique des tiges ferromagnétiques,
- la figure 9 est un graphique de comparaison de l'évolution de l'impédance de sortie d'une antenne ferrite selon un mode de réalisation de l'invention et d'antennes selon l'art antérieur sur un abaque de Smith,
- la figure 10 est un graphique représentant le gain d'une antenne ferrite selon deux modes de réalisation de l'invention comprenant plusieurs contours principaux en fonction de la fréquence,
- la figure 11 est une vue schématique d'une antenne ferrite selon un cinquième mode de réalisation de l'invention relié à un amplificateur,
- les figures 12a, 12b et 12c sont des vues schématiques de système d'antennes selon différents modes de réalisation de l'invention,
- la figure 13 est une vue schématique en perspective d'un système d'antennes selon un mode de réalisation de l'invention.

**6. Description détaillée d'un mode de réalisation de l'invention**

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

La figure 2a représente schématiquement une antenne ferrite selon un premier mode de réalisation de l'invention.

L'antenne ferrite comprend deux bobinages principaux parallèles (physiquement et électriquement), un premier bobinage 1a principal enroulé autour d'une première tige 4a ferromagnétique principale et un deuxième bobinage 1b principal enroulé autour d'une deuxième tige 4b ferromagnétique principale, reliées en parallèle à un système 3 d'accord constitué d'un condensateur. Le condensateur peut être un condensateur variable afin de pouvoir modifier la valeur de la capacité dudit condensateur variable et ainsi permettre une accordabilité fréquentielle de l'antenne. Le système 3 d'accord et les deux bobinages 1a, 1b principaux forment un contour principal. Selon d'autres modes de réalisation, les bobinages principaux peuvent être reliés en série.

Selon un deuxième mode de réalisation de l'invention représenté schématiquement et en perspective sur la figure 2b, l'antenne ferrite comprend un seul bobinage 1 principal et le bobinage 1 principal comprend un nombre de tours différent (ici plus important, pour maximiser l'efficacité de rayonnement) que le bobinage 2 secondaire, de façon à ajuster l'impédance à l'accord.

Selon un troisième mode de réalisation de l'invention représenté schématiquement et en perspective sur la figure 2c, l'antenne ferrite comprend, comme dans le premier mode de réalisation de la figure 2a, deux bobinages 1a, 1b principaux et un bobinage 2 secondaire, comprenant ici le même nombre de tours.

Pour améliorer son adaptation, l'antenne ferrite comprend en outre un contour secondaire non-résonant formé d'un bobinage 2 secondaire enroulé autour d'une tige 5 ferromagnétique secondaire. Contrairement au contour principal, le contour secondaire n'est pas associé à un condensateur et ne forme donc pas de circuit LC résonant.

Les bobinages 1a, 1b principaux et le bobinage 2 secondaire sont physiquement parallèle, le bobinage 2 secondaire est électriquement séparé des bobinages principaux, et les bobinages sont centrés sur leurs tiges ferromagnétiques.

Les tiges ferromagnétiques présentent de préférences des formes, dimensions et propriétés radioélectriques identiques. Les tiges sont composées de matériaux ferromagnétiques dits « doux », typiquement à base de NiZn ou MnZn et possèdent des pertes préférentiellement faibles (tan δ << 1) dans la bande de fréquence de fonctionnement de l'antenne ferrite.

Le sens du bobinage entre le ou les bobinages principaux et le bobinage secondaire peut être identique ou différent, sans influence sur l'efficacité de rayonnement à la fréquence principale de résonance. La section du fil formant le bobinage est de préférence identique dans tous les bobinages et possède une forte conductivité. Par exemple, les bobinages peuvent être formés de fil de Litz pour une augmentation de l'efficacité de rayonnement.

Le système 3 d'accord permet le réglage de l'antenne ferrite : notamment, le condensateur du système 3 d'accord de capacité C forme avec le bobinage d'inductance L un contour LC avec une première fréquence $f_{r1}$ de résonance, dite fréquence d'accord, approximativement égale à :

$$f_{r1} \approx \frac{1}{2\pi\sqrt{LC}}$$

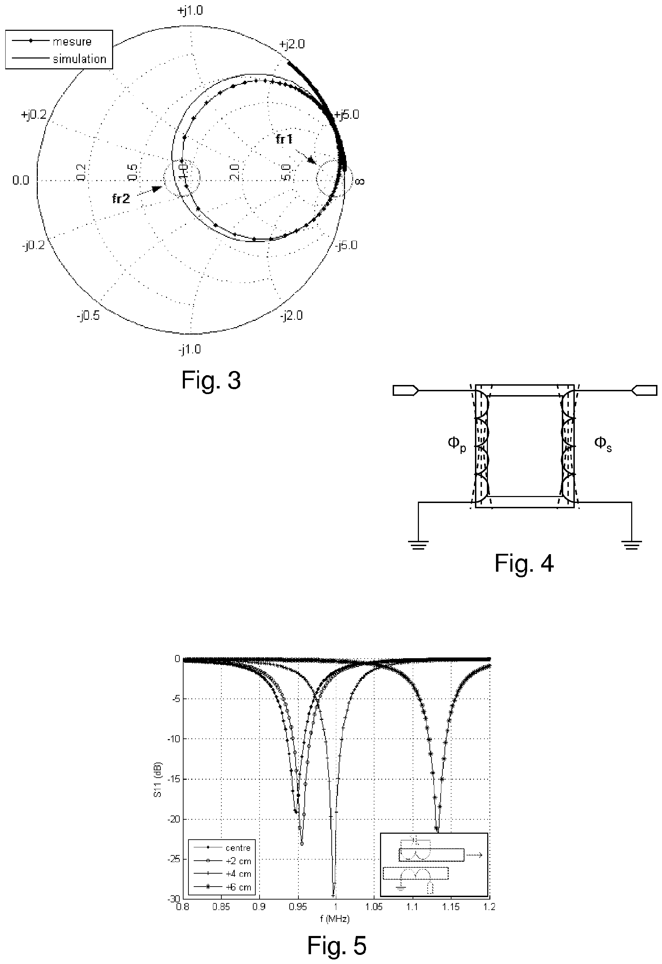

Le contour principal seul à une impédance réelle importante à cette première fréquence $f_{r1}$ de résonance. Le bobinage 2 secondaire permet de créer une deuxième fréquence $f_{r2}$ de résonance où la tension et le courant sont mis en phase de façon à fournir une impédance réelle plus faible par rapport à la première fréquence $f_{r1}$ de résonance. La figure 3, représentant un graphique représentant l'évolution de l'impédance de sortie d'une antenne ferrite selon un mode de réalisation de l'invention sur un abaque de Smith, par simulation ou par mesure sur antenne ferrite réelle, montre les fréquences $f_{r1}$ et $f_{r2}$ de résonance.

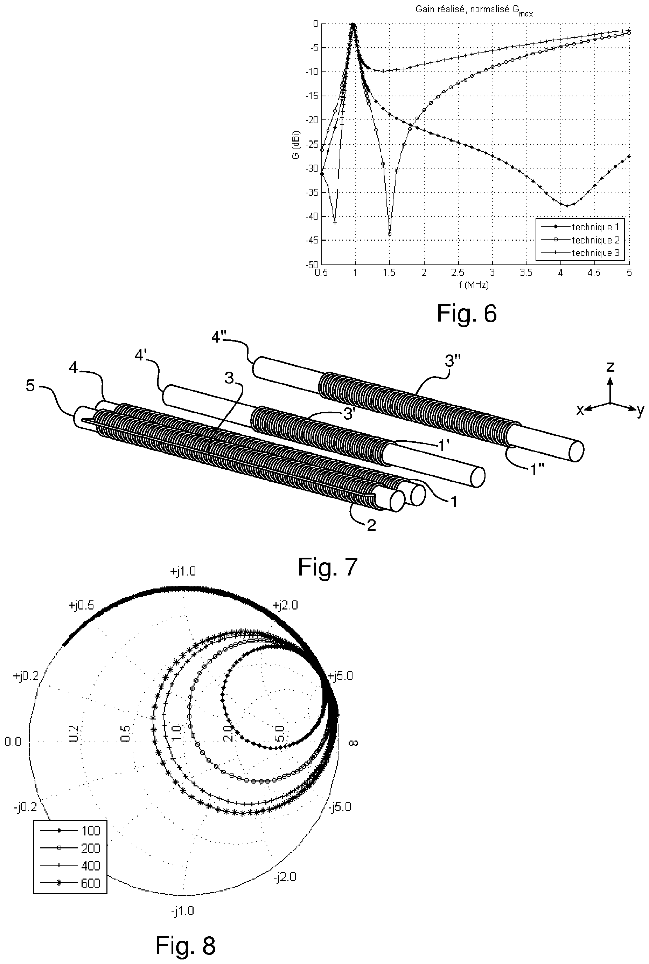

Le fonctionnement de l'antenne ferrite selon l'invention repose sur un principe de couplage magnétique, similaire au fonctionnement d'un transformateur, et tel que représenté sur la figure 4 représentant le flux magnétique circulant entre deux bobinages. Sur cette figure, les bobinages sont enroulés sur un même noyau ferromagnétique formant une boucle fermée. Le flux Φp magnétique du premier bobinage est transmis vers le flux Φs magnétique du deuxième bobinage, avec un coefficient de couplage k qui se situe généralement entre 0,3 et 0,6 pour des matériaux utilisés dont la perméabilité magnétique relative varie entre 100 et 600. La figure 8 représente graphique représentant l'évolution de l'impédance de sortie d'une antenne ferrite selon différents modes de réalisation de l'invention sur un abaque de Smith selon la perméabilité magnétique relative des tiges ferromagnétiques, avec les valeurs 100, 200, 400 et 600.

Dans l'antenne ferrite selon l'invention, les tiges ferromagnétiques ne forment pas une boucle fermée et les flux magnétiques sont dirigés dans le même sens (lorsque l'antenne est en fonctionnement proche de la résonance et après la résonance) de façon à s'ajouter de manière constructive, ce qui permet une propagation efficace de l'onde électromagnétique générée par l'antenne ferrite.

Contrairement aux solutions de l'art antérieur des figures 1a et 1b dans lequel les flux magnétiques s'inversent au-delà de la fréquence de résonance, la direction des flux magnétique dans l'antenne ferrite selon l'invention reste dans le même sens, permettant de conserver un gain important même au-delà de la fréquence d'accord, ce qui permet d'être utilisé dans un système amorti.

L'antenne ferrite selon l'invention permet d'obtenir une impédance faible à la deuxième fréquence $f_{r2}$ de résonance : lorsque les nombres de tours du ou des bobinages principaux et du bobinage 2 secondaire sont identiques, l'impédance à la deuxième fréquence $f_{r2}$ de résonance est de l'ordre de 20 Ω à 200 Ω, selon le facteur de qualité du contour résonant, le niveau de couplage des bobinages qui est fonction de l'espacement entre le ou les bobinages principaux et le bobinage secondaire, le nombre de tours dans les bobinages et la perméabilité relative des tiges ferromagnétiques.

Le nombre de tours du bobinage 2 secondaire permet d'ajuster cette impédance, une diminution du nombre de tours entrainant une diminution de l'impédance.

Une impédance plus forte, entre plusieurs centaines d'Ohms à plusieurs kΩ est obtenue à la première fréquence $f_{r1}$ de résonance. Cette impédance est ajustée de la même façon par le nombre de tours du bobinage secondaire ou l'espacement entre les bobinages.

Les fréquences à la résonance peuvent être ajustées par variation de la capacité d'accord mais aussi par déplacement transversal de la première tige 4 ferromagnétique par rapport à la deuxième tige 5 ferromagnétique.

La figure 5 représente un graphique représentant le niveau d'adaptation d'une antenne ferrite selon un mode de réalisation de l'invention adaptée à 50 Ω en fonction de la position de la tige ferromagnétique principale par rapport à la tige ferromagnétique secondaire. Les courbes représentent un déplacement nul (centre), ou de deux, quatre, et six centimètres dans la direction principale de la tige ferromagnétique principale et dans le sens indiqué par le schéma en bas à droite. Le déplacement de la tige permet l'adaptation vers des fréquences plus hautes (du fait de la diminution de l'inductance du bobinage 1 principal) et une augmentation de la partie réelle de l'impédance. Le déplacement maximal de la tige permis et de l'ordre de 20% à 40% de la longueur de la tige. Lorsque que le contour comprend plusieurs bobinages principaux et donc plusieurs tiges ferromagnétiques principales, les déplacements des tiges 4 ferromagnétiques principales peuvent être identiques ou différents d'une tige à l'autre.

La figure 6 représente un graphique de comparaison du gain d'une antenne ferrite selon un mode de réalisation de l'invention et d'antennes selon l'art antérieur décrites précédemment (la légende « technique 1 » correspond à une antenne telle que représentée en figure 1a, la légende « technique 2 » correspond à une antenne telle que représentée en figure 1b, la légende « technique 3 » correspond à une antenne ferrite selon l'invention) en fonction de la fréquence. Les trois antennes ont des tiges ferromagnétiques identiques, le même nombre de tours de bobinage et des tiges ferromagnétiques centrées sur le bobinage.

Si la performance des antennes est comparable à la première fréquence de résonance (ici 1MHz), l'antenne selon l'invention a une baisse inférieure du gain à des fréquences supérieures. L'antenne selon l'invention a ainsi une bande de fréquence plus importante, et peut être par exemple utilisée dans un système duplex où la fréquence de réception est plus élevée que la fréquence d'émission à la fréquence de résonance.

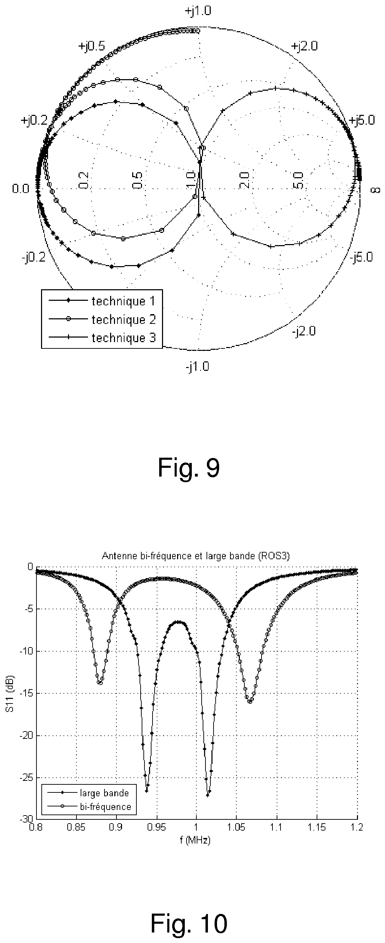

La figure 9 représente un graphique de comparaison de l'évolution de l'impédance de sortie d'une antenne ferrite selon un mode de réalisation de l'invention et d'antennes selon l'art antérieur sur un abaque de Smith. La légende des courbes est identique aux courbes de la figure 5. Les bobinages des trois antennes ont un même nombre de tours. Pour le même nombre de tour et le même gain, l'antenne représentée sur la figure 1a (technique 1) ne possède qu'une impédance exploitable, la deuxième étant presque nulle, l'antenne représentée sur la figure 1b (technique 2) possède une impédance faible à la résonance secondaire, inférieure à 5 Ω, et l'antenne selon l'invention (technique 3) possède une impédance élevée à la résonance secondaire, autour de 1 kΩ.

La figure 7 représente schématiquement en perspective une antenne ferrite selon un quatrième mode de réalisation de l'invention. Dans ce mode de réalisation, l'antenne ferrite comprend une pluralité de contour principaux, chacun formés d'un bobinage 1, 1', 1" principal enroulé autour d'une tige 4, 4' et 4" ferromagnétique principale. L'antenne ferrite comprend un unique bobinage 2 secondaire enroulé autour d'une tige 5 ferromagnétique secondaire, auquel est couplé les bobinages 1, 1' et 1" principaux.

Les bobinages 1, 1' et 1" principaux comprennent un nombre de tours différents, de façon à réaliser de façon à former une antenne multi-résonante, c'est-à-dire ayant plusieurs fréquences de résonance, en particulier autant que de contours principaux. Dans d'autres modes de réalisation non représentés, les contours principaux ont des bobinages principaux ayant des caractéristiques proches en termes de nombre de tours et d'accord par le système d'accord, de façon à former une antenne large bande : une antenne multi-résonante à fréquences de résonances rapprochées permet l'élargissement de la bande de fréquence et forme une antenne large bande. De même, un choix judicieux des facteurs de qualité des différents condensateurs permet de générer une réponse multi-résonante de largeur de bande fréquentiellement variable ou au contraire large bande.

Selon un mode de réalisation de l'invention, au moins un contour supplémentaire, ou tous les contours supplémentaires, peuvent être éloignés ou rapprochés du contour principal dans une direction transversale (donc perpendiculaire) à la direction principale du contour principal, de façon à permettre une adaptation fréquentielle de l'antenne.

La figure 10 représente un graphique représentant le gain d'une antenne ferrite selon deux modes de réalisation de l'invention comprenant plusieurs contours principaux en fonction de la fréquence, tel que l'antenne ferrite décrite en référence à la figure 7. En particulier, la courbe « large bande » correspond à une antenne présentant une large bande entre 0,92 MHz et 1,04 MHz, et la courbe « bi-fréquence » correspond à une antenne présentant une résonance à deux fréquences, 0, 87 MHz et 1,06 MHz.

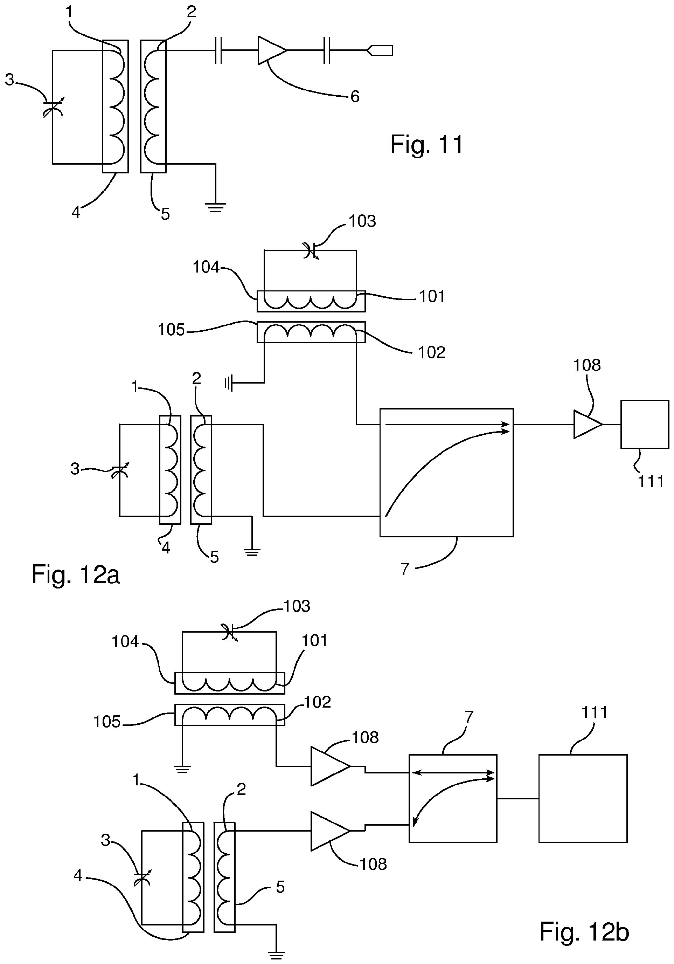

La figure 11 représente schématiquement une antenne ferrite selon un cinquième mode de réalisation de l'invention utilisée pour la réception et comprenant un seul bobinage 1 principal, et reliée à un amplificateur 6 au niveau du bobinage 2 secondaire. L'amplificateur 6 requiert à son entrée une impédance spécifique pour un fonctionnement optimal, qui peut être obtenu par réglage de l'impédance de l'antenne ferrite comme expliqué précédemment. Pour une antenne ferrite selon l'invention utilisée comme émission, l'antenne doit être connectée à un dispositif d'émission, par exemple directement à un générateur ou alors à une sortie d'amplificateur et doit posséder la même impédance d'entrée que le dispositif d'émission pour éviter un retour de la puissance injectée.

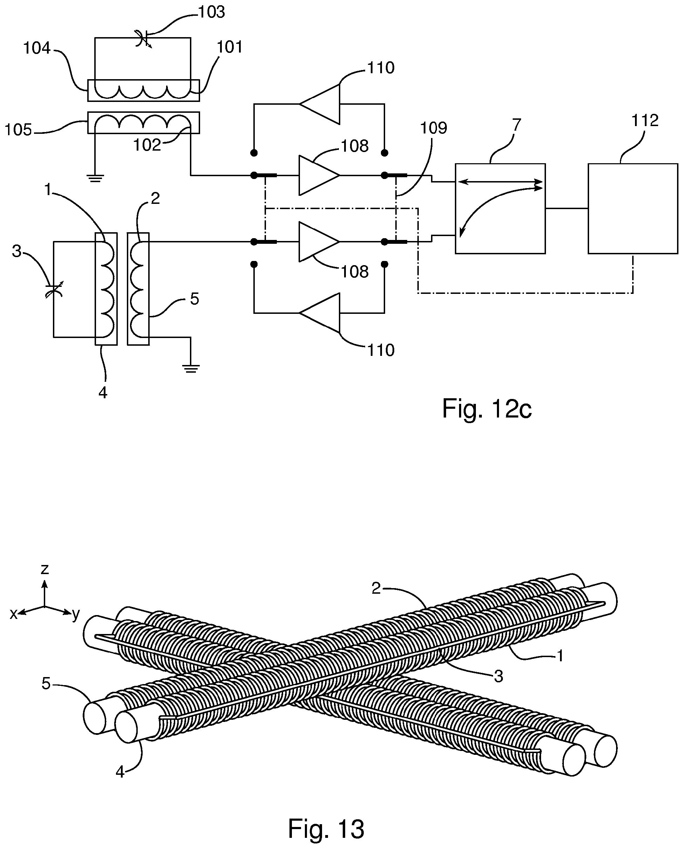

Les figures 12a, 12b et 12c représentent schématiquement des systèmes d'antennes selon différents modes de réalisation de l'invention connectés à des équipements de télécommunication de façon à former un terminal de communication électronique (ou terminal de télécommunication), et la figure 13 représente schématiquement un système d'antennes selon un de ces modes de réalisation en perspective.

Les systèmes d'antennes comprennent chacun deux antennes ferrites selon un mode de réalisation de l'invention :

- une première antenne ferrite comprenant un bobinage 1 principal enroulé autour d'une tige 4 ferromagnétique principale et reliée à un système 3 d'accord, ainsi qu'un bobinage 2 secondaire enroulé autour d'une tige 5 ferromagnétique secondaire,
- une deuxième antenne ferrite comprenant un bobinage 101 principal enroulé autour d'une tige 104 ferromagnétique principale et reliée à un système 103 d'accord, ainsi qu'un bobinage 102 secondaire enroulé autour d'une tige 105 ferromagnétique secondaire.

Les deux antennes ferrites, notamment leurs bobinages 2, 102 secondaires sont reliées à un déphaseur 7, permettant un déphasage électrique entre les deux antennes de $\pm\pi/4$. Le déphaseur ne fonctionne que si les antennes ferrites ont la même impédance caractéristique que le déphaseur, ce qui est possible en utilisant les possibilités de réglage de l'impédance décrites précédemment.

Dans le mode de réalisation représenté sur la figure 12a, le déphaseur du système d'antennes est à un amplificateur 108 et à un dispositif 111 de réception (ou récepteur). Dans ce mode de réalisation, les antennes sont adaptées à 50 Ω. Le déphaseur a aussi une impédance caractéristique de 50 Ω et est donc connecté directement d'une part aux antennes, d'autre part à l'amplificateur 108 aussi adapté à 50 Ω. Le signal amplifié par l'amplificateur est transmis au récepteur 111.

Dans le mode de réalisation représenté sur la figure 12b, chaque antenne du système d'antennes est connectée à un amplificateur 108 haute impédance. Les amplificateurs 108 haute impédance sont reliés au déphaseur 7 et le déphaseur 7 est relié à un récepteur 111. Dans ce mode de réalisation, les antennes sont adaptées à 1 kΩ et peuvent ainsi être reliées aux amplificateurs 108 haute impédance ayant une impédance plus élevée que les antennes et ayant un fonctionnement optimal lorsque les antennes sont adaptées à 1 kΩ. Les impédances de sorties des amplificateurs 108 haute impédance sont toutefois de 50 Ω et sont ainsi reliées au déphaseur 7, qui transmet le signal déphasé et combiné au récepteur 111.

Dans le mode de réalisation représenté sur la figure 12c, le système d'antennes est analogue au mode de réalisation représenté sur la figure 12b, dans lequel le récepteur est remplacé par un dispositif 112 d'émission/réception (ou émetteur/récepteur), et auquel on ajoute un circuit permettant l'émission via deux amplificateurs 110 à impédance 50 Ω parallèles aux amplificateurs 108 haute impédance. Des relais 109 permettent de choisir entre l'émission et la réception. Grâce à la double résonance des antennes du système d'antenne, il est possible d'utiliser une première résonance à faible impédance (50 Ω) pour l'émission, et une deuxième résonance à haute impédance (quelques kΩ) pour la réception. Selon d'autres modes de réalisation, l'émission et la réception peuvent fonctionner sur une fréquence unique avec impédance à 50 Ω pour tous les amplificateurs.

Comme représenté sur la figure 13, les deux antennes ferrites sont disposées perpendiculairement l'une à l'autre, de façon à ce que chaque antenne compense les nuls de rayonnement de l'autre antenne aux extrémités des tiges ferromagnétiques. Le système obtenu a donc un rayonnement omnidirectionnel, et peut être utilisé notamment pour des applications radiogoniométriques.

Les antennes et les systèmes d'antennes décrits peuvent être intégrés à un système d'émission/réception d'ondes ou un terminal de communication électronique, ces systèmes ou terminaux comprenant des dispositifs d'émission (par exemple générateur avec ou sans amplificateur) et/ou des dispositifs de réception (reliés à une ligne de transmission par exemple via un amplificateur).

## Revendications

1. Antenne ferrite pour l'émission et/ou la réception d'ondes de fréquence kilométrique, hectométrique ou décamétrique, comprenant :

    - au moins un premier contour résonant, dit contour principal, comprenant au moins un premier bobinage dit bobinage (1) principal, au moins une première tige ferromagnétique dite tige (4) ferromagnétique principale et un système (3) d'accord, chaque bobinage (1) principal étant enroulé autour d'une tige (4) ferromagnétique principale et connecté au système (3) d'accord comprenant un condensateur, C, relié en parallèle avec le bobinage (1) principal, de manière à créer une première fréquence de résonance , $f_{r1}$, dite fréquence d'accord ;
    - un deuxième contour, dit contour secondaire, comprenant un bobinage (2) secondaire séparé électriquement de chaque bobinage (1) principal et une tige (5) ferromagnétique secondaire autour de laquelle est enroulé le bobinage (2) secondaire, ladite antenne étant **caractérisée en ce que** :

    - ledit contour secondaire est non résonant à savoir qu'il ne comprend pas de condensateur de sorte que le circuit secondaire ne forme pas un circuit de type LC; et
    - chaque tige (4) ferromagnétique principale et la tige (5) ferromagnétique secondaire sont disposées parallèlement les unes aux autres de façon à permettre un couplage magnétique de chaque bobinage (1) principal avec le bobinage (2) secondaire, de manière à créer une deuxième fréquence de résonance , $f_{r2}$, distincte de la fréquence d'accord.

2. Antenne ferrite selon la revendication 1, **caractérisée en ce que** la tige (4) ferromagnétique principale et la tige (5) ferromagnétique secondaire sont configurées pour pouvoir être déplacées en translation l'une par rapport à l'autre selon leurs directions principales.

3. Antenne ferrite selon l'une des revendications 1 à 2, **caractérisée en ce que** le condensateur est un condensateur variable.

4. Antenne ferrite selon l'une des revendications 1 à 3, **caractérisée en ce qu'**elle comprend au moins un deuxième contour principal, dit contour supplémentaire, et disposé parallèlement au contour principal et au contour secondaire.

5. Antenne ferrite selon la revendication 4, **caractérisée en ce qu'**au moins un des contours supplémentaires est configuré pour pouvoir être déplacé en translation par rapport au contour principal, dans une direction transversale à la direction principale de la tige ferromagnétique principale du contour principal.

6. Système d'antenne, **caractérisé en ce qu'**il comprend deux antennes ferrites selon l'une des revendications 1 à 5, une première antenne ferrite et une deuxième antenne ferrite dont les tiges ferromagnétiques principales et secondaire s'étendent selon une direction perpendiculaire à la direction des tiges ferromagnétiques principales et secondaire de la première antenne ferrite, et la deuxième antenne ferrite présentant un déphasage électrique de $\pm\pi/2$ par rapport à la première antenne ferrite.

7. Système d'émission/réception d'ondes de fréquence kilométrique, hectométrique ou décamétrique, **caractérisé en ce qu'**il comprend une antenne ferrite selon l'une des revendications 1 à 5.

8. Système d'émission/réception d'ondes de fréquence kilométrique, hectométrique ou décamétrique, **caractérisé en ce qu'**il comprend un système d'antenne selon la revendication 6.

**9.** Terminal de communication électronique pour la réception et/ou l'émission d'ondes de fréquence kilométrique, hectométrique ou décamétrique, **caractérisé en ce qu'**il comprend une antenne selon l'une des revendications 1 à 5, et un dispositif d'émission/réception relié à l'antenne et adapté pour traiter les signaux reçus par l'antenne et/ou transmettre à l'antenne des signaux à émettre.

**10.** Terminal de communication électronique selon la revendication 9, **caractérisé en ce qu'**il comprend des moyens de réglage électronique et/ou mécanique de la fréquence principale d'accord de l'antenne.

**Patentansprüche**

**1.** Ferritantenne zum Senden und/oder Empfangen von Wellen im kilometrischen, hektometrischen oder dekametrischen Frequenzbereich, umfassend:

- mindestens eine erste Resonanzkontur, Hauptkontur genannt, die mindestens eine erste Wicklung, Hauptwicklung (1) genannt, mindestens einen ersten ferromagnetischen Stab, Hauptstab (4) genannt, und ein Abstimmsystem (3) umfasst, wobei jede Hauptwicklung (1) um einen ferromagnetischen Hauptstab (4) gewickelt und an das Abstimmsystem (3) angeschlossen ist, das einen Kondensator, C, umfasst, der mit der Hauptwicklung (1) parallel geschaltet ist, um eine erste Resonanzfrequenz, $f_{r1}$, Abstimmfrequenz genannt, zu erzeugen;
- eine zweite Kontur, Sekundärkontur genannt, die eine von jeder Hauptwicklung (1) elektrisch getrennte Sekundärwicklung (2) und einen ferromagnetischen Sekundärstab (5) umfasst, um den die Sekundärwicklung (2) gewickelt ist,

wobei die Antenne **dadurch gekennzeichnet ist, dass**:

- die Sekundärkontur nicht resonant ist, das heißt, dass sie keinen Kondensator enthält, so dass der Sekundärkreis keine LC-Schaltung bildet; und
- jeder ferromagnetische Hauptstab (4) und der ferromagnetische Sekundärstab (5) parallel zueinander angeordnet sind, um eine magnetische Kopplung jeder Hauptwicklung (1) mit der Sekundärwicklung (2) zu ermöglichen, so dass eine zweite Resonanzfrequenz, $f_{r2}$, erzeugt wird, die sich von der Abstimmfrequenz unterscheidet.

**2.** Ferritantenne nach Anspruch 1, **dadurch gekennzeichnet, dass** der ferromagnetische Hauptstab (4) und der ferromagnetische Sekundärstab (5) so konfiguriert sind, dass sie in ihren Hauptrichtungen gegeneinander verschiebbar sind.

**3.** Ferritantenne nach einem der Ansprüche 1 bis 2, **dadurch gekennzeichnet, dass** es sich bei dem Kondensator um einen variablen Kondensator handelt.

**4.** Ferritantenne nach einem der Ansprüche 1 bis 3, **dadurch gekennzeichnet, dass** sie mindestens eine zweite Hauptkontur, Zusatzkontur genannt, umfasst, und parallel zu der Hauptkontur und der Sekundärkontur angeordnet ist.

**5.** Ferritantenne nach Anspruch 4, **dadurch gekennzeichnet, dass** mindestens eine der Zusatzkonturen so konfiguriert ist, dass sie in Bezug auf die Hauptkontur in einer Richtung quer zu der Hauptrichtung des ferromagnetischen Hauptstabs der Hauptkontur verschiebbar ist.

**6.** Antennensystem, **dadurch gekennzeichnet, dass** es zwei Ferritantennen nach einem der Ansprüche 1 bis 5 umfasst, eine erste Ferritantenne und eine zweite Ferritantenne, deren ferromagnetische Haupt- und Sekundärstäbe sich in einer Richtung senkrecht zur Richtung der ferromagnetischen Haupt- und Sekundärstäbe der ersten Ferritantenne erstrecken, wobei die zweite Ferritantenne eine elektrische Phasenverschiebung von $\pm\pi/2$ gegenüber der ersten Ferritantenne aufweist.

**7.** System zum Senden/Empfangen von Wellen im kilometrischen, hektometrischen oder dekametrischen Frequenzbereich, **dadurch gekennzeichnet, dass** es eine Ferritantenne nach einem der Ansprüche 1 bis 5 umfasst.

**8.** System zum Senden/Empfangen von Wellen im kilometrischen, hektometrischen oder dekametrischen Frequenzbereich, **dadurch gekennzeichnet, dass** es ein Antennensystem nach Anspruch 6 umfasst.

**9.** Elektronisches Kommunikationsendgerät zum Empfangen und/oder Senden von Wellen im kilometrischen, hektometrischen oder dekametrischen Frequenzbereich, **dadurch gekennzeichnet, dass** es eine Antenne nach einem der Ansprüche 1 bis 5 und eine Sende-/Empfangsvorrichtung umfasst, die mit der Antenne verbunden ist und dazu geeignet ist, die von der Antenne empfangenen Signale zu verarbeiten und/oder der Antenne zu sendende Signale zu übertragen.

**10.** Elektronisches Kommunikationsendgerät nach Anspruch 9, **dadurch gekennzeichnet, dass** es Mittel zur elektronischen und/oder mechanischen Einstellung der Hauptabstimmfrequenz der Antenne umfasst.

**Claims**

1. Ferrite antenna for transmitting and/or receiving kilometric, hectometric or decametric frequency waves, comprising:

   - at least one first resonant contour, referred to as main contour, comprising at least one first winding referred to as main winding (1), at least one first ferromagnetic rod referred to as main ferromagnetic rod (4) and a tuning system (3), each main winding (1) being wound around a main ferromagnetic rod (4) and connected to the tuning system (3) comprising a capacitor, C, connected in parallel with the main winding (1), so as to create a first resonance frequency referred to as tuning frequency $f_{r1}$,
   - a second contour, referred to as secondary contour, comprising a secondary winding (2) separated electrically from each main winding (1) and a secondary ferromagnetic rod (5) around which the secondary winding (2) is wound,

   said antenna being **characterized in that**,

   - the secondary contour is non-resonant **in that** it does not comprise a capacitor so that the secondary circuit does not form an LC-type circuit; and
   - each main ferromagnetic rod (4) and the secondary ferromagnetic rod (5) are arranged parallel to one another to enable a magnetic coupling of each main winding (1) with the secondary winding (2), so as to create a second resonance frequency, $f_{r2}$, distinct from the tuning frequency.

2. Ferrite antenna according to claim 1, **characterised in that** the main ferromagnetic rod (4) and the secondary ferromagnetic rod (5) are configured to be able to be moved in translation with respect to one another along the main directions thereof.

3. Ferrite antenna according to one of claims 1 to 2, **characterised in that** the capacitor is a variable capacitor.

4. Ferrite antenna according to one of claims 1 to 3, **characterised in that** it comprises at least one second main contour, referred to as additional contour, and arranged in parallel to the main contour and to the secondary contour.

5. Ferrite antenna according to claim 4, **characterised in that** at least one of the additional contours is configured to be able to be moved in translation with respect to the main contour, in a direction transverse to the main direction of the main ferromagnetic rod of the main contour.

6. Antenna system, **characterised in that** it comprises two ferrite antennas according to one of claims 1 to 5, a first ferrite antenna and a second ferrite antenna of which the main and secondary ferromagnetic rods extend along a direction perpendicular to the direction of the main and secondary ferromagnetic rods of the first ferrite antenna, and the second ferrite antenna having an electrical phase shift of $\pm\pi/2$ with respect to the first ferrite antenna.

7. System for transmitting/receiving kilometric, hectometric or decametric frequency waves, **characterised in that** it comprises a ferrite antenna according to one of claims 1 to 5.

8. System for transmitting/receiving kilometric, hectometric or decametric frequency waves, **characterised in that** it comprises an antenna system according to claim 6.

9. Electronic communication terminal for receiving and/or transmitting kilometric, hectometric or decametric frequency waves, **characterised in that** it comprises an antenna according to one of claims 1 to 5, and a device for transmitting/receiving connected to the antenna and adapted for processing the signals received by the antenna and/or transmitting to the antenna, signals to be transmitted.

10. Electronic communication terminal according to claim 9, **characterised in that** it comprises means for electronically and/or mechanically adjusting the main tuning frequency of the antenna.

Fig. 1a

Fig. 1b

Fig. 2a

Fig. 2b

Fig. 2c

Fig. 3

Fig. 4

Fig. 5

Fig. 6

Fig. 7

Fig. 8

Fig. 9

Fig. 10

EP 3 516 736 B1

Fig. 11

Fig. 12a

Fig. 12b

Fig. 12c

Fig. 13

**EP 3 516 736 B1**

## RÉFÉRENCES CITÉES DANS LA DESCRIPTION

**Documents brevets cités dans la description**

- JP 2000183632 B